# EUROPÄISCHE PATENTSCHRIFT

(11) **EP 1 468 273 B1**
(45) Veröffentlichungstag und Bekanntmachung des Hinweises auf die Patenterteilung: **20.08.2008**
(21) Anmeldenummer: 03704386.6
(22) Anmeldetag: 13.01.2003
(51) Int. Cl.: G01N 21/47, G01N 21/57

(54) **VERFAHREN ZUR UNTERSUCHUNG DES WEISSANLAUFENS VON DISPERSIONSFILMEN**
METHOD OF ANALYSING BLUSHING IN DISPERSION FILMS
PROCEDE POUR ETUDIER LE TERNISSEMENT BLANC DE FILMS EN DISPERSION

(30) Priorität: 14.01.2002 DE 10201075
(43) Veröffentlichungstag der Anmeldung: 20.10.2004
(73) Patentinhaber: BASF SE, 67056 Ludwigshafen (DE)
(72) Erfinder: SCHROF, Wolfgang, 67271 Neuleiningen (DE); MÜLLER, Thorsten, 67063 Ludwigshafen (DE); CENTNER, Alexander, 67127 Rödersheim-Gronau (DE); LEHMANN, Stephan, 55118 Mainz (DE); HADELER, Joachim, 67227 Frankenthal (DE)
(74) Vertreter: Isenbruck, Günter
(86) Internationale Anmeldenummer: PCT/EP2003/000233
(87) Internationale Veröffentlichungsnummer: WO 2003/058216

(56) Entgegenhaltungen:
- EP-A- 1 030 173
- WO-A-01/32320
- US-A- 4 687 338
- US-A- 5 155 558
- US-B1- 6 268 218

## Beschreibung

Die Erfindung betrifft ein Verfahren zur Untersuchung des Weissanlaufens von Dispersionsfilmen.

Das Phänomen des Weissanlaufens von zunächst klaren Dispersionsfilmen bedeutet eine unerwünschte Trübung der klaren Beschichtung. Es kann unmittelbar nach Herstellung der Beschichtung oder bei späterem Kontakt der Beschichtung mit Wasser erfolgen. Ursachen für das Weissanlaufen sind Entmischungsphänomene im Dispersionsfilm oder Einlagerungen von Wassertröpfchen, was zu Lichtstreuung und Trübung führt.

Zur Bestimmung des Weissanlaufens von Dispersionsfilmen werden neben der optischen Beurteilung mit dem Auge meist Spectrocolorimeter oder Opazimeter verwendet.

Die visuelle Bestimmung mit dem Auge ist subjektiv und variiert mit dem einzelnen Betrachter. Die Bestimmung der Kinetik des Weissanlaufen mit hoher Präzision ist mit visueller Inspektion nicht möglich. Spektralcolorimeter und Opazimeter sind relativ aufwendige und teure Geräte. Ein hoher Probendurchsatz von mehreren hundert oder mehreren Tausend Proben in kurzer Zeit ist mit den genannten Methoden nicht zu erreichen.

US 4,072,426 offenbart ein Verfahren und eine Vorrichtung zur Bestimmung der Reflexionseigenschaften von beschichteten Oberflächen. Dabei wird aus dem von einer Lichtquelle emittierten Licht mittels einer Sammellinse ein Bündel paralleler Lichtstrahlen erzeugt und auf die zu untersuchende reflektierende Oberfläche geleitet. Das regulär von der Oberfläche reflektierte Licht wird mittels einer zweiten Sammellinse auf einen ersten Empfänger, beispielsweise einen lichtempfindlichen Widerstand, fokussiert. Gestreutes Licht wird zum Großteil mittels einer den Empfänger umgebenden ringförmigen Blende ausgeblendet und das von der Ringöffnung durchgelassenen Licht mittels eines hinter der Blende befindlichen Konkavspiegels auf einen auf der Rückseite des ersten Empfängers angeordneten zweiten Empfänger fokussiert.

EP-A 1 030 173 offenbart ein Verfahren zur automatischen Untersuchung einer bewegten Oberfläche, beispielsweise einer Metallfolie. Dabei wird die bewegte Oberfläche mit zwei oder mehr gepulsten Lichtquellen aus verschiedenen Richtungen zu jeweils unterschiedlichen Zeiten beleuchtet, wobei die Pulsfrequenz > 1 kHz ist. Die beleuchtet Oberflächenregion wird mittels einer Linienscan-Kamera (line scan camera) synchron zu den Lichtpulsen in Linien aufgenommen. Das Verfahren dient zur Erkennung von Oberflächenanomalien.

Aufgabe der ist, ein Verfahren zur Untersuchung des Weissanlaufens von Dispersionsfilmen bereitzustellen, das einfach zu realisieren ist und einen hohen Probendurchsatz ermöglicht.

Gelöst wird die Aufgabe durch ein Verfahren zur parallelen und automatisierten Untersuchung des Weissanlaufens von n Proben von Dispersionsfilmen, bei dem
(a) ein beleuchtetes Array von n räumlich getrennten Proben der Dispersionsfilme bereitgestellt wird,
(b) das Array der n Proben mittels einer CCD-Kamera zu m + 1 verschiedenen Zeitpunkten t₀ bis tₘ aufgenommen wird und die Aufnahmen digitalisiert werden,
(c) aus den m + 1 verschiedenen digitalisierten Aufnahmen für zumindest einen Teil der n Proben je Probe mehrere Helligkeitswerte B(k, tᵢ) zu verschiedenen Zeitpunkten tᵢ, die aus t₀ bis tₘ ausgewählt sind, automatisch ermittelt werden, wobei B(k, tᵢ) der Helligkeitswert der k-ten der n Proben zum jeweiligen Zeitpunkt tᵢ ist und ein Maß für das Weissanlaufen dieser Probe zu diesem Zeitpunkt ist, indem über die einzelnen Helligkeitswerte von dieser Probe zugeordneten einzelnen Bildpunkten gemittelt wird,
(d) für zumindest einen Teil der n Proben aus den verschiedenen Helligkeitswerten B(k, tᵢ) je Probe jeweils ein Wert P(k) für einen für die Kinetik des Weissanlaufens charakteristischen Parameter ermittelt wird, wobei P(k) der Wert des charakteristischen Parameters für die k-te der n Proben ist.

Unter Dispersionsfilmen im Sinne der Erfindung werden ganz allgemein auf Basis von Polymerdispersionen hergestellte Beschichtungen verstanden.

Bei dem erfindungsgemäßen Verfahren wird ein üblicherweise rechteckiges Array von n räumlich getrennten Proben der Dispersionsfilme mit Flächen von üblicherweise 1 mm² bis 1000 cm², bevorzugt von 1 bis 100 cm² bereitgestellt. Eine andere Geometrie des Arrays, beispielsweise eine näherungsweise kreisrunde Anordnung der Proben, ist möglich. Die Zahl n der Proben kann, abhängig von der Dimension der Proben, sehr groß sein und beispielsweise bis zu 10 000 betragen. Sie beträgt mindestens zwei, üblicherweise 2 bis 1000 und bevorzugt 10 bis 1000. Die Proben sind vorzugsweise rechteckig und in regelmäßiger Anordnung auf einer transparenten oder schwarzen Unterlage aufgebracht. Beispielsweise können diese auf eine transparente Folie wie eine PET-Folie präpariert sein. Die Proben können auch in einem transparenten Probenhalter mit rechteckigen Vertiefungen angeordnet sein. Der Untergrund unter der transparenten Unterlage ist vorzugsweise schwarz.

Das Array wird vorzugsweise von mehreren gleichmäßig verteilten Lichtquellen beleuchtet, beispielsweise von zwei an gegenüberliegenden Seiten oder von vier an allen vier Seiten eines rechteckigen Arrays angeordneten Lichtquellen. Zur gleichmäßigen Beleuchtung wird vorzugsweise eine möglichst diffuse Lichtquelle eingesetzt, beispielsweise eine Weisslicht-Lampe mit Wolframdraht-Glühbirne.

Üblicherweise wird der Prozess des Weissanlaufens durch das Benetzen der Proben mit Wasser gestartet. Dazu werden die Proben in einem entsprechenden Behälter angeordnet und wird der Behälter mit Wasser geflutet. Es kann auch das Weissanlaufen durch Benetzung mit wässrigen Lösungen bestimmter Substanzen oder mit anderen Flüssigkeiten als Wasser untersucht werden. Es kann auch das Weissanlaufen der Proben an der Luft untersucht werden. Auch der umgekehrte Prozess, also das Abklingen des Weissanlaufens nach Entfernen des Wassers oder der Flüssigkeit, kann untersucht werden.

Das Weissanlaufen der Dispersionsfilme bewirkt eine zunehmende Streuung des Beleuchtungslichts an den Proben, wodurch die Helligkeit am Probenort erhöht wird.

Das Array der n Proben wird mittels einer CCD-Kamera zu m + 1 verschiedenen Zeitpunkten t₀ bis tₘ aufgenommen und die Aufnahmen werden digitalisiert. Die Zahl m der Messzeitpunkte kann beliebig groß sein, üblicherweise beträgt sie zwischen 10 und 1000. Die Zeitauflösung der Messung, das heißt der zeitliche Abstand zwischen einzelnen Messzeitpunkten, zu denen eine Aufnahme stattfindet, richtet sich nach der zu erwartenden Geschwindigkeit des Weissanlaufens und kann beispielsweise eine Sekunde oder auch eine Stunde betragen. Über eine digitale Bildaufnahme-Elektronik, beispielsweise einem Frame-Grabber-Interface, werden die einzelnen Aufnahmen in digitalem Format in den Speicher eines Steuerrechners, beispielsweise eines PC, abgelegt.

Aus den m + 1 verschiedenen digitalisierten Aufnahmen werden für zumindest einen Teil der n Proben je Probe mehrere Helligkeitswerte B(k, tᵢ) zu verschiedenen Zeitpunkten tᵢ, die aus t₀ bis tₘ ausgewählt sind, automatisch ermittelt. Vorzugsweise werden zu jedem der m + 1 Zeitpunkte t₀ bis tₘ Helligkeitswerte für jede der n Proben ermittelt. Dies ist sinnvoll, aber nicht unbedingt erforderlich. Bei einer Digitalisierung von z.B. 8 bit ist jedem Bildpunkt ein Helligkeitswert zwischen 0 und 255 zugeordnet. Der Helligkeitswert einer bestimmten Probe wird durch Mittelung der Helligkeitswerte von dieser Probe zugeordneten Bildpunkten ermittelt. Da die Zahl der Bildpunkte jeder Aufnahme der CCD-Kamera sehr groß ist, üblicherweise 500 000 bis 1 000 000 beträgt, entfallen bei einer Probenanzahl n von beispielsweise 1000 noch mehrere Hundert Bildpunkte auf jede einzelne Probe. Durch die Mittelung über viele Bildpunkte ist die Messgenauigkeit auch bei einer großen Zahl n von Proben noch hoch, d.h. deutlich größer als z.B. 8 bit.

Vorzugsweise wird die Mittelung nach jedem Aufnahmeschritt und vor dem nächsten Aufnahmeschritt, also in Echtzeit, durchgerührt. Dadurch wird die zu speichernde Datenmenge erheblich reduziert.

Vorzugsweise werden aus den digitalisierten Aufnahme des Probenarrays die Helligkeitswerte für eine Probe durch Mittelung der Helligkeitswerte von Bildpunkten ermittelt, die einer bestimmten, vorgegebenen Integrationsfläche zugeordnet sind, die klar innerhalb dieser Probe liegt. Die Größe der Integrationsfläche kann beispielsweise die Hälfte oder nur ein Zehntel der Probenfläche entsprechen und kann auch von Probe zu Probe variieren. Die Lage und Größe der Integrationsfläche kann vor jeder Messung vom Operator am Steuerrechner für jede Probe einzeln gewählt werden oder auch nach einem festen Muster für alle Proben vorgegeben sein, letzteres erfordert eine streng regelmäßigen Anordnung der Proben auf dem Array.

Vorzugsweise werden die Helligkeitswerte auf eine schwarze Fläche, die den Nullwert des Weissanlaufens definiert, und auf eine weiße Fläche, die den Maximalwert des Weissanlaufens definiert, normiert. Dazu werden in dem Proben-Array eine schwarze und eine weiße Referenzplatte angeordnet. Durch die Normierung werden Schwankungen in der Beleuchtungsintensität während der Messung ausgeglichen. Bei einer großen Anzahl von Proben können auch mehrere schwarze und weiße Referenzplatten in dem Array verteilt angeordnet sein und es kann jeweils auf die nächstliegenden Referenzplatten normiert werden.

Aus den erhaltenen Helligkeits-Zeit-Verläufen können für die einzelnen Proben Werte P(k) für Parameter ermittelt werden, die die Kinetik des Weissanlaufens charakterisieren. Anhand dieser Werte können die einzelnen Proben verglichen werden. Beispielsweise können die Helligkeits-Zeit-Verläufe durch einfache Exponentialfunktionen beschrieben werden, wodurch eine Geschwindigkeitskonstante für die Kinetik des Weissanlaufens als charakteristischer Parameter ermittelt werden kann. Andere sinnvolle charakteristische Parameter sind beispielsweise auch die Zeit, die bis zum Erreichen von 50% oder 90% eines bestimmten Maximalwertes der Helligkeit verstreicht, oder aber der Helligkeitswert, der nach einer vorgegebenen Zeit erreicht wird.

Das erfindungsgemäße Verfahren ist ein besonders einfach durchzuführendes Verfahren zur Bestimmung der Kinetik des Weissanlaufens, das einen hohen Probendurchsatz ermöglicht und auch bei hoher Probenzahl noch eine ausreichende Messgenauigkeit gewährleistet. Dadurch ist es besonders geeignet, an Verfahren der kombinatorischen Materialforschung angekoppelt zu werden, in denen eine automatische Formulierung von Dispersionen und ein automatisches Beschichten von Substraten erfolgt Derartige Verfahren der kombinatorischen Materialforschung sind durch einen hohen Ausstoß an zu charakterisierenden Proben gekennzeichnet und daher auf ein Verfahren zur schnellen Charakterisierung der Proben angewiesen. Durch Analyse der so erhaltenen großen Zahl von Einzelwerten des oder der für die Kinetik des Weissanlaufens bzw. des inversen Prozesses charakteristischen Parameter kann eine systematische Abhängigkeit von der Zusammensetzung der Dispersions-Formulierungen und der Herstellbedingungen ermittelt werden und können Struktur-Wirkungsbeziehungen aufgefunden werden, wodurch die Dispersionen (auch) hinsichtlich ihres Weissanlaufsverhaltens optimiert werden können. Beispielsweise können Art und Mengenverhältnis der in den Dispersionspolymeren enthaltenen Monomere, die Polymerarchitektur, die Konzentration der verschiedenen Polymere und der Hilfsstoffe in den Dispersionen und die Bedingungen bei der Herstellung der Beschichtungen systematisch variiert werden.
Figur 1 zeigt schematisch eine geeignete Messanordnung in Seitenansicht.
Figur 2 zeigt schematisch die gleiche Messanordnung in Aufsicht.
Figur 3 zeigt beispielhaft gemessene Helligkeits-Zeit-Verläufe.

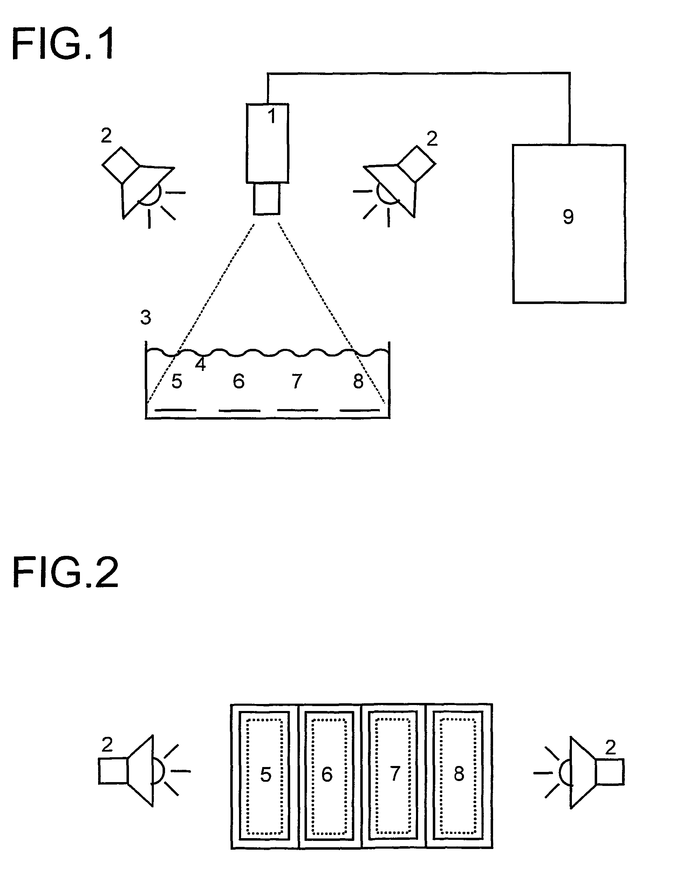

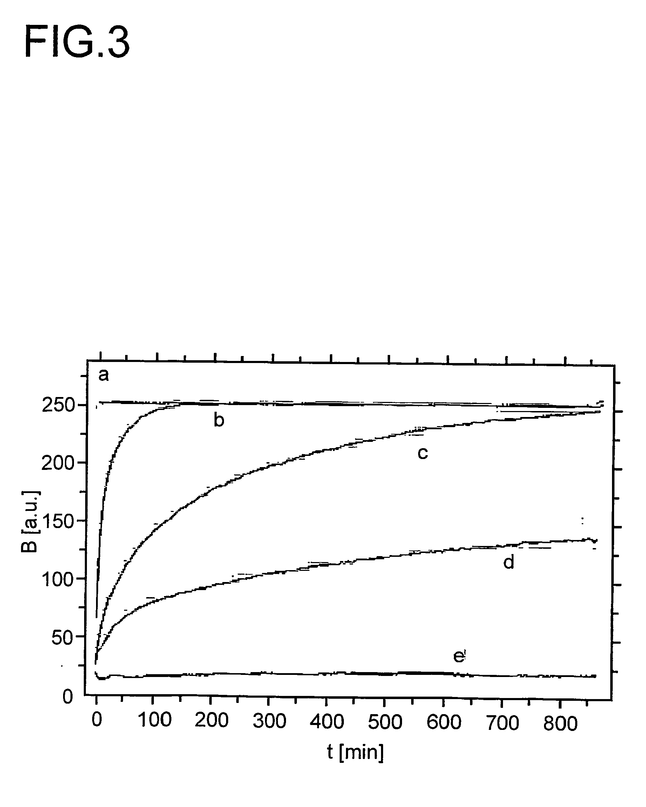

Proben von Dispersionsfilmen 6 und 7 und Referenzplatten 5 und 8 mit Flächen von 1 mm² bis 1000 cm² werden in einem Array angeordnet unter einer CCD-Kamera 1 in einem Behälter 3 platziert. Die Proben der Dispersionsfilme sind auf einem transparentem Substrat wie einer PET-Folie oder auf schwarzem Substrat präpariert. Bei Verwendung eines transparenten Substrats wird der Untergrund vorzugsweise schwarz gewählt. Insgesamt können 2 — 1000 Proben gleichzeitig untersucht werden. Nachdem die Proben gleichmäßig mit Wasser 4 geflutet worden sind, beginnt die computergesteuerte CCD-Kamera 1 in regelmäßigen zeitlichen Abständen Aufnahmen zu machen. Eine gleichmäßige Beleuchtung, wird vorzugsweise von gegenüberliegenden Seiten durch zwei diffuse Lichtquellen bewirkt. Mit zunehmendem Weissanlaufen erfolgt eine verstärkte Streuung des Beleuchtungslichts an den Proben und somit eine Erhöhung der Helligkeit am Probenort. Über eine digitale Bildaufnahme-Elektronik, beispielsweise eine Bildwandlerkarte oder ein Frame-Grabber-Interface, werden die Bilder in digitalem Format in den Speicher eines Steuerrechners 9, beispielsweise eines PC, abgelegt. Ein selbstentwickeltes Programm ermittelt laufend in wählbaren Schritten die mittlere Helligkeit jeder der untersuchten Proben über grafisch wählbare Integrationsflächen (areas of interest), die in Figur 2 gestrichelt dargestellt sind. Eine Normierung auf eine schwarze Referenzfläche 5 und eine weiße Referenzfläche 8 erlauben eine Normierung und die zeitliche Verfolgung des Weissanlaufens auch bei variierender Beleuchtungsintensität Die Kinetik des Weissanlaufens der einzelnen Proben kann am Bildschirm laufend aktualisiert werden, beispielsweise durch Darstellung entsprechender Helligkeits/Zeit-Kurven. Derartige Kurven sind in Figur 3 beispielhaft gezeigt. Wiederholfrequenz und gesamte Zeitdauer der Messung sind wählbar. Der inverse Prozess, d.h. das Zurückgehen des Weissanlaufens nach Entfernung des Wassers, kann ebenso verfolgt werden. Die Helligkeits/Zeit-Verläufe können durch einfache Exponentialkurven beschrieben werden. Dies erleichtert die Vergleichbarkeit von verschiedenen Proben anhand von Geschwindigkeitskonstanten, von charakteristischen Zeiten und/oder maximal erreichten Helligkeitswerten.

## Patentansprüche

1. Verfahren zur parallelen und automatisierten Untersuchung des Weissanlaufens von n Proben von Dispersionsfilmen, bei dem
(a) ein beleuchtetes Array von n räumlich getrennten Proben der Dispersionsfilme bereitgestellt wird,
(b) das Array der n Proben mittels einer CCD-Kamera zu m + 1 verschiedenen Zeitpunkten t₀ bis tₘ aufgenommen wird und die Aufnahmen digitalisiert werden,
(c) aus den m + 1 verschiedenen digitalisierten Aufnahmen für zumindest einen Teil der n Proben je Probe mehrere Helligkestswerte B(k, tᵢ) zu verschiedenen Zeitpunkten tᵢ, die aus t₀ bis tₘ ausgewählt sind, automatisch ermittelt werden, wobei B(k, tᵢ) der Helligkeitswert der k-ten der n Proben zum jeweiligen Zeitpunkt tᵢ ist und ein Maß für das Weissanlaufen dieser Probe zu diesem Zeitpunkt ist,
(d) für zumindest einen Teil der n Proben aus den verschiedenen Helligkeitswerten B (k, tᵢ) je Probe jeweils ein Wert P(k) für einen für die Kinetik des Weissanlaufens charakteristischen Parameter ermittelt wird,
wobei P(k) der Wert des charakteristische Parameter für die k-te der n Proben ist.

2. Verfahren nach Anspruch 1, **dadurch gekennzeichnet, dass** die Helligkeitswerte auf eine schwarze Fläche als Nullwert des Weissanlaufens und auf eine weiße Flächen als Maximalwert des Weissanlaufens normiert werden.

3. Verfahren nach Anspruch 1 oder 2, **dadurch gekennzeichnet, dass** aus einer digitalisierten Aufnahme des Probenarrays die Helligkeitswerte für eine Probe durch Mittelung der Helligkeitswerte aller Bildpunkte, die einer bestimmten Integrationsfläche innerhalb dieser Probe zugeordnet sind, ermittelt werden.

4. Verfahren nach einem der Ansprüche 1 bis 3, **dadurch gekennzeichnet, dass** die Zahl n der Proben von 2 bis 1000 beträgt.

## Claims

1. A process for parallel and automated evaluation of the blushing of n samples of dispersion films, which comprises
(a) providing an illuminated array of n spatially separated samples of the dispersion films,
(b) imaging the array of n samples by means of a CCD camera at m + 1 different times to to tₘ and digitizing the images,
(c) automatically determining a plurality of brightnesses B(k, tᵢ) for each sample at different times tᵢ selected from to to tₘ from the m + 1 different digitized images for at least a portion of the n samples, where B(k, tᵢ) is the brightness of the kth of n samples at the respective time tᵢ and is a measure for the blushing of this sample at this time,
(d) determining a value P(k) of a parameter which is characteristic of the kinetics of the blushing from the different brightnesses B(k, tᵢ) for each sample for at least a portion of the n samples, where P(k) is the value of the characteristic parameter for the kth of the n samples.

2. The process according to claim 1, wherein the brightnesses are normalized to a black surface as a zero value of blushing and to a white surface as a maximum value of blushing.

3. The process according to the claim 1 or 2, wherein the brightnesses of a sample are determined from a digitized image of a sample array by averaging the brightnesses of all pixels which are assigned to a certain area of interest within this sample.

4. The process according to any of claims 1 to 3, wherein the number n of the samples is from 2 to 1 000.

## Revendications

1. Procédé d'étude automatique en parallèle de la décoloration en blanc de n échantillons de films à dispersion, dans lequel:
(a) on prépare une série éclairée de n échantillons de film de dispersion séparés spatialement,
(b) on enregistre la série des n échantillons à l'aide d'une caméra CCD en m + 1 instants différents t₀ à tₘ et on numérise les enregistrements,
(c) sur les m + 1 enregistrements numérisés différents d'au moins une partie des n échantillons, on détermine automatiquement pour chaque échantillon plusieurs indices de luminosité B(k, tᵢ) en différents instants tᵢ sélectionnés parmi t₀ à tₘ, B(k, tᵢ) étant l'indice de luminosité du k-ième des n échantillons à l'instant tᵢ correspondant et étant une mesure de la décoloration en blanc de cet échantillon à cet instant,
(d) pour au moins une partie des n échantillons, à partir des différents indices de luminosité B(k, tᵢ), on détermine pour chaque échantillon une valeur P(k) d'un paramètre caractéristique de la cinétique de la décoloration en blanc, P(k) étant la valeur du paramètre caractéristique pour le k-ième des n échantillons.

2. Procédé selon la revendication 1, **caractérisé en ce que** les indices de luminosité sont normalisés par rapport à une surface noire qui sert de valeur nulle de la décoloration en blanc et une surface blanche qui constitue la valeur maximale de la décoloration en blanc.

3. Procédé selon les revendications 1 ou 2, **caractérisé en ce qu'**à partir d'un enregistrement numérisé de la série d'échantillons, on détermine l'indice de luminosité d'un échantillon en calculant la valeur moyenne des indices de luminosité de tous les points d'image qui sont associés à une surface d'intégration définie à l'intérieur de cet échantillon.

4. Procédé selon l'une des revendications 1 à 3, **caractérisé en ce que** le nombre n d'échantillons est compris entre 2 et 1 000.
